# FASCICULE DE BREVET EUROPEEN

(11) **EP 0 345 106 B1**
(45) Date de publication et mention de la délivrance du brevet: **29.09.1993**
(21) Numéro de dépôt: 89401268.1
(22) Date de dépôt: 03.05.1989
(51) Int. Cl.: C01B 33/34

(54) **Nouvelles zéolithes de type structural ton, leur préparation et leur utilisation**
Zeolithe mit dem Strukturtyp von Ton, ihre Herstellung und ihre Verwendung
Zeolites having the structural type of ton, their preparation and their use

(30) Priorité: 19.05.1988 FR 8806841
(43) Date de publication de la demande: 06.12.1989
(73) Titulaire: INSTITUT FRANCAIS DU PETROLE, 92502 Rueil-Malmaison (FR)
(72) Inventeur: Patarin, Joel, F-68200 Mulhouse (FR); Lamblin, Jean-Marc, F-68200 Mulhouse-Dornac (FR); Faust, Anne-Catherine, F-68100 Mulhouse (FR); Guth, Jean-Louis, F-68200 Mulhouse (FR); Raatz, Francis, F-78260 Achères (FR)

(56) Documents cités:
- EP-A- 0 031 255
- EP-A- 0 077 624
- EP-A- 0 094 288
- EP-A- 0 172 068
- EP-A- 0 253 449

## Description

La présente invention concerne une nouvelle zéolithe de type structural TON et un procédé de fabrication de cette zéolithe.

Les zéolithes sont des tectosilicates cristallisés. Leur structure tridimensionnelle est construite par un assemblage de tétraèdres TO₄, mettant en commun leurs sommets, deux tétraèdres différents n'ayant qu'un oxygène en commun. Dans les zéolithes du type aluminosilicate, qui sont les plus communes, T représente le silicium tétravalent ainsi que l'aluminium trivalent. Les cavités et canaux, de dimensions moléculaires, de la charpente aluminosilicatée accueillent les cations compensant le déficit de charge lié à la présence de l'aluminium trivalent dans les tétraèdres.

La composition chimique des zéolithes contenant dans leur charpente les éléments Al et Si, peut être représentée par la formule approchée suivante :

M_{2/n}O₁, Al₂O₃, xSiO₂

où M représente un cation de valence n, tel que par exemple un alcalin, un alcalino-terreux ou un cation organique ; x est susceptible de varier en fonction des structures entre deux et l'infini, auquel cas la zéolithe est une silice microporeuse.

Chaque type de zéolithe possède une structure poreuse distincte. La variation des dimensions et formes des pores d'un type à l'autre entraîne des propriétés adsorbantes et catalytiques différentes. Seules les molécules de certaines dimensions et formes sont capables d'entrer dans les pores d'une zéolithe particulière. La composition chimique avec en particulier, la nature des cations de compensation échangeables, est également un facteur important intervenant dans la sélectivité de l'adsorption et surtout dans les propriétés catalytiques de ces produits.

Du fait de leurs propriétés de sélectivité géométrique et d'échange cationique, les zéolithes sont utilisées industriellement sur une large échelle aussi bien en adsorption (séchage de gaz, séparation de composés aromatiques, etc...) qu'en catalyse (craquage catalytique, hydrocraquage, isomérisation, etc...).

Le document EP-A-0.031.255 décrit une synthèse hydrothermale de zéolithe en présence de fluor, le milieu réactionnel contenant un structurant organique qui est un ammonium quaternaire. La zéolithe ainsi obtenue n'est pas de structure TON et elle possède une taille de cristaux particulière.

D'autre part, bien que de nombreuses zéolithes du type aluminosilicate existent dans la nature, la recherche de produits ayant des propriétés nouvelles a conduit au cours de ces dernières années à la synthèse d'une grande variété de ces aluminosilicates à structure zéolithique. Parmi les nouvelles structures dont la synthèse a été récemment réussie, on trouve les zéolithes de structure TON appelées également selon les auteurs :
THETA-1 brevet européen (E.P. 57049)
ISI-1 brevet européen (E.P. 87017)
ZSM-22 brevet américain (U.S.P. 4481177)
NU-10 brevet européen (E.P. 77624)
KZ-2 (publication : Zeolites 3 (1983) 8).

Toutes ces zéolithes correspondant au même type structural ont été obtenues dans des milieux de synthèse que l'on peut qualifier de classiques ; c'est-à-dire des milieux alcalins dont les pH sont généralement supérieurs à 9.

Par rapport aux synthèses réalisées en milieu fluorure, les synthèses effectuées en milieu classique alcalin (OH⁻) présentent un certain nombre d'inconvénients.

En effet, en milieu basique la plupart des zéolithes synthétisées sont métastables et on risque l'apparition, au cours de la synthèse, de phases solides plus stables, ainsi que la précipitation de phases non désirées. Cette difficulté ne fait que s'accroître lorsque les quantités préparées augmentent, c'est-à-dire lorsque l'on passe des essais laboratoire au stage industriel. Par ailleurs, ces zéolithes métastables dans le milieu réactionnel basique ne sont obtenues que grâce à une forte sursaturation en espèces actives dans le milieu, ce qui provoque une nucléation rapide et, par conséquent conduit à des cristaux de zéolithe de petites tailles, les dimensions moyennes de ces cristaux se situent dans le domaine du micromètre. L'élaboration de cristaux de plus grandes tailles est donc difficile. Or, dans certaines applications d'échange d'ions, d'adsorption, ou de catalyse, il serait intéressant de pouvoir travailler avec des cristaux de grandes tailles ce qui, par exemple, permettrait d'éviter le conditionnement des zéolithes par agglomération avec tous les inconvénients que cela comporte.

De nombreuses applications, en particulier en catalyse acide, nécessitent des zéolithes sous une forme protonée et complètement débarrassée de leurs cations de compensation alcalins ou alcalino-terreux introduits lors de la synthèse. On peut y accéder par des procédés d'échange d'ions répétés et longs avec des cations NH₄⁺ suivis de calcination pour les décomposer en cations H⁺. Cette étape d'échange d'ions pourrait être éliminée si l'on pouvait remplacer entièrement les cations alcalins ou alcalino-terreux par des cations NH₄⁺ lors de la synthèse. Or, ceci n'est pas possible lorsque le pH dépasse sensiblement 10, NH₄⁺ étant dans ces conditions transformée en NH₃. Par ailleurs, les synthèses effectuées à des pH où le cation NH₄⁺ est stable sont difficiles et longues à cause de la faible solubilité des sources de silice à ces bas pH.

Un avantage supplémentaire des synthèses réalisées en milieu fluorure par rapport aux synthèses classiques est de conduire à des solides dont les propriétés acides et d'échange ionique sont de natures différentes. Les catalyseurs acides préparés à partir de solides obtenus en milieu fluorure présentent des propriétés catalytiques améliorées. Il est à ce niveau très important de noter que la structure cristallographique d'un solide ne suffit pas pour définir entièrement les propriétés de ce solide, et plus particulièrement les propriétés acides qui jouent un rôle primordial en catalyse.

Contrairement à leurs homologues synthétisés selon l'art antérieur, les zéolithes de structure TON préparées selon l'invention contiennent, après l'étape de synthèse et également après l'étape d'élimination des composés organiques introduits au cours de la synthèse, du fluor. Le fluor comme nous le verrons confère aux zéolithes de structure TON selon l'invention des propriétés acides et d'échange ionique tout à fait particulières.

L'invention a donc pour objet une nouvelle zéolithe synthétique du type TON, un nouveau procédé de synthèse de cette structure où les inconvénients cités précédemment sont évités et qui confère aux zéolithes suivant l'invention des propriétés, particulièrement des propriétés acides améliorées. La zéolithe selon l'invention peut être utilisée notamment en adsorption et en catalyse.

Les zéolithes selon l'invention ont la formule générale habituelle suivante :

M_{2/n}O, Al₂O₃, xSiO₂,

- où M représente est un proton ou un cation métallique (n étant la valence de M). On verra ci-dessous que dans une méthode selon l'invention de préparation de la zéolithe, le dit proton ou cation métallique résulte de la décomposition thermique d'au moins un cation comme par exemple NH₄⁺ ou n-butylammonium, dipentylammonium, diammonium-1, 4 pentane, n-pentylammonium présents seuls ou en mélange dans le milieu de synthèse et (ou) un cation de métal non décomposable issu ou non du milieu réactionnel comme par exemple les cations alcalins et/ou alcalino-terreux ou d'autres métaux précisés ci-après ;
La zéolithe selon l'invention est caractérisée par :
a) x, nombre compris entre 50 et 40 000 (x étant le rapport molaire SiO₂/Al₂O₃),
b) un diagramme de diffraction X représenté dans le tableau I de la description,
c) une teneur en fluor, (mesurée par exemple après l'étape d'élimination des composés organiques décrites ci-après) et comprise entre 0.005 et 2 % en poids.

Les nouvelles zéolithes de structure TON selon l'invention peuvent généralement présenter une dimension de cristaux comprise entre 0,1 et 250 µm (micromètres) soit 0,1x10-6m et 250x10⁻⁶ m et de préférence entre 2 et 130 µm (2x10⁻⁶ et 130x10⁻⁶ m).

D'une façon générale, la préparation de la zéolithe synthétique cristalline selon l'invention est caractérisée en ce que :
a) on forme un mélange réactionnel ayant un pH inférieur à 9 comprenant de l'eau, au moins une source de silice, au moins une source d'un sel d'aluminium, au moins une source d'agent mobilisateur contenant des ions fluorure, au moins une source d'agent structurant pouvant fournir des cations organiques, ledit mélange ayant une composition en termes de rapports molaires, comprise dans les intervalles de valeurs suivante :

| | |
|---|---|
| SiO₂/Al₂O₃ | ≧ 20 |
| F⁻/SiO₂ | 0,1 à 6 |
| cations organiques/SiO₂ | 0,1 à 6 |
| H₂O/SiO₂ | 6 à 200 |

b) on maintient ledit mélange à une température de chauffage au plus égale à environ 250°C jusqu'à ce qu'on obtienne un composé cristallin et
c) on calcine ledit composé à une température supérieure à 350°C.

La présence, après l'étape d'élimination des composés organiques (conditions précisées ci-après), de fluor dans les zéolithes de structure TON selon l'invention à des teneurs de préférence comprises entre 0,02 et 1,0 % en poids entraîne des modifications des propriétés acides et d'échange ionique des solides. Ceux-ci se distinguent alors tout à fait des zéolithes de structure TON connues dans l'art antérieur. Les solides selon l'invention sont caractérisés par un spectre de vibration infrarouge dans la région 3800 à 3500 cm⁻¹ qui présente des bandes attribuées classiquement aux groupes Si-OH (zone 3730-3750 cm⁻¹) et aux groupes Al-OH structuraux (région 3580-3640 cm⁻¹) très peu intenses voire inexistantes par rapport à celles d'une zéolithe de structure TON classique de rapports Si/Al voisin.

L'absence ou la quasi absence de groupes Al-OH structuraux dans les zéolithes selon l'invention est confirmée par les capacités d'échange ionique de ces solides. En effet, les capacités d'échange ionique pour des cations tels que par exemple Na⁺, K⁺, Ga³⁺, Pt(NH₃)₄²⁺ etc... sont très inférieures aux capacités d'échanges ioniques totales que l'on peut calculer à partir de la teneur en aluminium de la charpente cristalline.

Ces solides ne présentant pas ou peu d'hydroxyles structuraux et dont la capacité d'échange est réduite possèdent de manière surprenante des propriétés acides remarquables. Ainsi la thermodésorption d'ammoniac qui permet de rendre compte de l'acidité globale d'un solide (nombre et force des différents types de sites acides) donne un spectre de désorption qui montre clairement que les solides selon l'invention sont très acides. Les spectres de thermodésorption d'ammoniac sont comparables à ceux que l'on obtiendrait avec des zéolithes de structures TON classiques, cependant, il est clair que l'acidité des solides selon l'invention est d'une nature différente.

Sans nous lier à une théorie particulière, on peut supposer par exemple que les solides selon l'invention ont à la place des sites 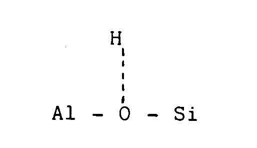
de charpente classique, des sites du type : 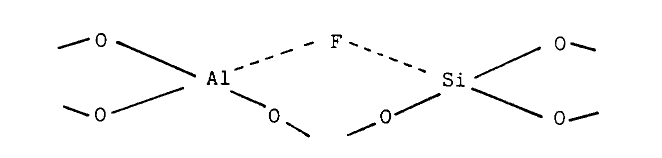
La nature précise des sites acides présents dans les solides de structure TON selon l'invention reste à préciser, cependant il est clair que ces sites sont liés en grande partie à la présence de fluor et se distinguent, de par leur nature, des sites acides des zéolithes de structure TON classique.

Par des traitements particuliers, il est possible d'éliminer partiellement ou totalement le fluor contenu dans les solides selon l'invention sans altérer leur cristallinité.

Une technique que l'on peut utiliser pour défluorer les solides consiste à procéder à un traitement dans une solution de NH₄OH à des températures comprises par exemple entre la température ambiante et 150°C (traitement sous pression).

L'élimination partielle ou complète du fluor conduit :
- d'une part à l'apparition dans le spectre IR de deux bandes situées vers 3740 et 3608 cm-1 correspondant d'après les attributions admises dans la littérature scientifique aux groupes silanols terminaux et aux groupes Al-OH structuraux respectivement et
- d'autre part à la restauration de la capacité d'échange ionique telle que l'on peut la calculer à partir de la teneur en aluminium de charpente des solides.

Ainsi en fonction du traitement de défluoration, on peut obtenir, pour un même rapport Si/Al de charpente, des solides contenant une quantité de groupes Al-OH et Si-OH ainsi qu'une capacité d'échange ionique variables. Un solide partiellement défluoré contient donc outre des sites acides du type Al-OH pouvant jouer un rôle de sites d'échanges, des sites acides particuliers dont la nature exacte n'est pas encore totalement élucidée mais qui résultent indéniablement de l'introduction dans les solides de fluor lors de la synthèse.

D'une façon plus précise, le procédé de synthèse consiste en ce que :
a) on forme un mélange réactionnel ayant un pH inférieur à 10 comprenant de l'eau, au moins une source de silice, éventuellement une source d'un sel d'aluminium, au moins une source d'agent mobilisateur contenant des ions fluorure (F⁻) et au moins une source d'agent structurant pouvant fournir des cations organiques, par exemple les cations n-butylammonium (nBUTA⁺), dipentylammonium (DIPENTA⁺), diammonium-1, 4 pentane (DIAPENT⁺), n-pentylammonium (nPENTA⁺), le dit mélange ayant une composition en termes de rapports molaires :

| | |
|---|---|
| SiO₂/Al₂O₃ | ≧ 20 |
| F⁻/SiO₂ | 0,1 à 6 |
| cations organiques/SiO₂ | 0,1 à 6 |
| H₂O/SiO₂ | 6 à 200, |

b) on maintient le dit mélange à une température de chauffage au plus égale à 250°C jusqu'à ce qu'on obtienne un composé cristallin et
c) on calcine le dit composé à une température supérieure à 350°C et de préférence supérieure à 450°C dans un milieu contenant de l'oxygène.

On peut avantageusement chauffer le mélange réactionnel dans un autoclave revêtu intérieurement de polytétrafluoroéthylène (PTFE) entre environ 60°C et 210°C et de préférence entre 70°C et 190°C pendant une durée qui peut varier de 24 à 1300 heures selon la température de réaction, jusqu'à l'obtention d'un solide cristallisé que l'on sépare des eaux-mères par filtration et qui est ensuite lavé à l'eau distillée.

De manière avantageuse on peut préparer le mélange réactionnel à un pH compris entre 4 et 10 et de manière préférée entre 6 et 9.

Selon un mode préféré de préparation, les rapports molaires des constituants du mélange réactionnel peuvent être compris dans les intervalles (exprimés en rapports molaires) suivants :

| | |
|---|---|
| SiO₂/Al₂O₃ | ≧ 100 |
| F⁻/SiO₂ | 1-3 |
| structurant organique/SiO₂ | 1-3 |
| H₂O/SiO₂ | 15-80. |

On peut ajouter audit mélange réactionnel au moins un sel complémentaire dans un rapport molaire sel complémentaire/SiO₂ compris généralement entre environ 0,1 et 4 et de préférence entre 0,2 et 0,5 et/au moins un germe de cristal de la zéolithe formée selon l'invention dans un rapport pondéral cristal/SiO₂ compris généralement entre 0,01 et 0,1 et de manière préférée entre environ 0,02 et 0,03, de telle sorte que la morphologie, la taille des cristaux ainsi que la cinétique de la réaction de cristallisation peuvent être avantageusement contrôlée.

On calcine avantageusement les cristaux de zéolithe à une température comprise entre environ 520 et 800°C sous atmosphère de gaz sec comme par exemple de l'air ou un gaz inerte, de façon à décomposer l'agent structurant présent dans les pores de la zéolithe.

On peut travailler avantageusement en milieu agité, ce qui permet de diminuer considérablement le temps de réaction.

Le pH du milieu réactionnel, inférieur à 10, peut être obtenu soit directement à partir de l'un ou plusieurs des réactifs mis en oeuvre, soit par l'ajout d'un acide, d'une base, d'un sel acide, d'un sel basique ou d'un mélange tampon complémentaire.

De nombreuses sources de silice peuvent être utilisées. On peut citer les silices sous forme d'hydrogels, d'aérogels, de suspensions colloïdales ainsi que les silices résultant de la précipitation de solutions de silicates solubles ou de l'hydrolyse d'esters siliciques comme l'ester tétraéthylique de l'acide orthosilicique Si(OC₂H₅)₄ ou de complexes comme le fluorosilicate de sodium Na₂SiF₆ ou d'ammonium (NH₄)₂SiF₆.

Parmi les sels d'aluminium utilisés, on choisira de préférence le chlorure d'aluminium hydraté : AlCl₃, 6H₂O, le nitrate d'aluminium nonahydraté Al(NO₃)₃, 9H₂O, le sulfate d'aluminium à 16 molécules d'eau, ou le fluorure d'aluminium trihydraté AlF₃, 3H₂O. Par ailleurs, au lieu de partir de sources séparées de silice et d'un sel d'aluminium on peut également prendre des sources où les deux éléments sont combinés comme par exemple un gel aluminosilicaté fraîchement précipité.

Les anions fluorure F⁻ peuvent généralement être introduits sous forme de sels desdits agents structurants ou d'ammonium ou de métaux alcalins comme par exemple NaF, NH₄F, NH₄HF₂, nBUTAF, DIPENTA-F, DIAPENT-F, nPENTA-F ou sous forme de composés hydrolysables pouvant libérer des anions fluorure dans l'eau comme le fluorure de silicium SiF₄ ou le fluorosilicate d'ammonium (NH₄)₂SiF₆ ou de sodium Na₂SiF₆.

Les cations nBUTA⁺, DIPENTA⁺, DIAPENT⁺, nPENTA⁺ qui sont les agents structurants, sont ajoutés de préférence sous la forme des amines correspondantes ou après salification de ces dernières par l'acide fluorhydrique par exemple. Les acides ou sels d'acides, les bases ou sels basiques ajoutés éventuellement en complément, pour amener le pH du milieu à la valeur désirée peuvent être choisis parmi les acides courts comme par exemple HF, HCl, HNO₃, H₂SO₄, CH₃COOH où les sels acides comme par exemple NH₄HF₂, KHF₂, NaHSO₄, les bases courantes comme par exemple NaHCO₃, Na₂CO₃, CH₃COONa, Na₂S, NaHS ou les mélanges tampons comme par exemple (CH₃COOH, CH₃COONa) ou (NH₄OH, NH₄Cl).

Après l'étape d'élimination des cations organiques et éventuellement de défluoration partielle ou totale , on peut introduire dans des zéolithes de structure TON selon l'invention par les techniques d'échange ionique bien connues dans l'art antérieur, au moins un élément du tableau périodique, dont les cations peuvent être préparés en milieu aqueux et choisis dans la famille constituée par les groupes IIA, IIIA, IB, IIB, IIIB, IVB et VIIIA de la classification périodique des éléments. On citera à titre d'exemple les cations alcalins, alcalino-terreux, les cations de terres-rares, Fe^{II}, Fe^{III}, Co^{II}, Co^{III}, Ni^{II}, Cu^{II}, Zn^{II}, Ag^{I}, Pt^{II}, etc.

L'identification des zéolithes de structure TON obtenues selon le procédé se fait de manière commode à partir de leur diagramme de diffraction des rayons X. Ce diagramme de diffraction peut être obtenu à l'aide d'un diffractomètre en utilisant la méthode classique des poudres avec le rayonnement K alpha du cuivre. Un étalon interne permet de déterminer précisément les valeurs des angles 2 thêta associées aux pics de diffraction. Les différentes distances interréticulaires dhkl, caractéristiques de l'échantillon, sont calculées à partir de la relation de BRAGG. L'estimation de l'erreur de mesure delta (dhkl) sur dhkl se calcule, en fonction de l'erreur absolue (2 thêta) affectée à la mesure de 2 thêta, par la relation de BRAGG. En présence d'un étalon interne cette erreur est minimisée et prise couramment égale à ± 0,05°. L'intensité relative I/Io affectée à chaque valeur de dhkl est estimée à partir de la hauteur du pic de diffraction correspondant. Cette dernière peut également être déterminée à partir d'un cliché sur chambre Debye-Scherrer. On utilise souvent une échelle de symboles pour caractériser cette intensité : FF = très forte, F = forte, mF = moyenne à forte, m = moyenne, mf = moyenne à faible, f = faible, ff = très faible, fff = très très faible.

Le tableau 1, représente le diagramme de diffraction des rayons X caractéristiques des zéolithes de structure TON obtenues selon l'invention avant calcination. Dans la colonne des dhkl, on a représenté les valeurs extrêmes que peuvent prendre les différentes équi-distances réticulaires dhkl. A chacune de ces valeurs doit être affectée l'erreur de mesure (dhkl). Celle-ci est généralement comprise entre ± 0,07 et ± 0,002 selon la valeur de 2 thêta.

Les exemples qui suivent sont destinés à illustrer l'invention sans toutefois en limiter la portée.

**TABLEAU 1**

| dhkl | I/Io | dhkl | I/Io |
|---|---|---|---|
| 10,84 - 10,91 | FF | 3,285 - 3,290 | f |
| 8,59 - 8,66 | mF | 3,220 - 3,225 | ff |
| 6,91 - 6,94 | mF | 2,972 - 2,980 | f |
| 5,39 - 5,42 | m | 2,938 - 2,940 | ff |
| 5,30 - 5,34 | m | 2,889 - 2,893 | ff |
| 4,55 - 4,58 | mf | 2,754 - 2,760 | ff |
| 4,31 - 4,36 | F | 2,738 - 2,740 | ff |
| 3,67 - 3,69 | FF | 2,714 - 2,720 | ff |
| 3,60 - 3,61 | FF | 2,520 - 2,526 | m |
| 3,46 - 3,48 | F | 2,429 - 2,431 | m |
| 3,36 - 3,37 | f | 2,359 - 2,362 | m |
| 3,345 - 3,355 | f | | |

### EXEMPLE 1.

Préparation d'une zéolithe TON de rapport molaire SiO₂/Al₂O₃ supérieur à 34000.

Dans cet exemple, le structurant organique utilisé est la di-n pentylamine. On prépare le sel de di-n pentylamine de formulation (C₅H₁₁)₂NH₂⁺F⁻ par salification de l'amine correspondante (20 cm³) avec 8,6 cm³ d'acide fluorhydrique 40 %.

Au sel ainsi formé, sont ajoutés 80 cm³ d'eau distillée. On mélange la solution obtenue à 5,84 g de silice pulvérulente obtenue par pyrohydrolyse du tétrachlorure de silicium et commercialisée par la société DEGUSSA sous le nom d' "AEROSIL". Cette dernière contient 3 % en masse d'eau environ, la teneur pondérale en aluminium est inférieure à 0,003 %.

La composition molaire du mélange réactionnel est la suivante :
1SiO₂ (Aerosil), 1(C₅H₁₁)₂NH, 2 HF, 46 H₂O
fraction molaire engagée 0,097.

Le mélange (pH = 5-6) est chauffé pendant 8 jours à 170°C dans un autoclave renfermant un flacon de 120 cm³ en polytétrafluoroéthylène.

On recueille 3,2 g de cristaux aciculaires dont la taille moyenne est de (20 x 2) micromètres (µm).

L'analyse chimique du solide obtenu, exprimée en pourcentage massique est la suivante :
% SiO₂ = 90,8 ; (C₅H₁₁)₂NH₂⁺ (hydraté) = 8,2 ; % F⁻ = 1 %

Le diagramme de diffraction des rayons X est tout à fait analogue à celui du tableau 1 de la description.

Après calcination à 650°C sous air pendant 5 heures, la perte de masse observée est de = 9 % et aucun changement structural significatif n'est observé. La teneur en élément fluor est alors de 0,1 % en poids.

### EXEMPLE 2.

Cet exemple illustre la possibilité d'utiliser une autre source d'agent structurant que celle de l'exemple 1, de travailler en milieu agité et en présence de germes.

Dans ce cas le structurant est le diamino-1, 4 pentane. Les sources de silice et de fluorure sont par ailleurs les mêmes que celles de l'exemple 1.

L'amine est également au préalable salifiée par l'acide fluorhydrique.

La composition molaire du mélange est la suivante :
1SiO₂ (aérosil) 1C₅H₁₄N₂, 2,5 HF, 16 H₂O
fraction molaire engagée 0,05.

Au mélange réactionnel, sont ajoutés 0,06 g de cristaux d'une zéolithe TON finement broyés obtenus selon un procédé analogue à celui de l'exemple 1.

Le milieu de synthèse (pH = 8) est placé dans le même type d'autoclave que pour l'exemple précédent. Il est ensuite porté à une température de 170°C pendant une durée de 3 jours dans une étuve équipée d'un système d'agitation (rotation de l'autoclave autour de son axe horizontal).

Après réaction, le pH final est de 8,5. On récupère 2,7 g de zéolithe TON.

Le diagramme de diffraction des rayons X de cette zéolithe est conforme à celui du tableau 1.

Le rapport molaire SiO₂/Al₂O₃ du solide est supérieur à 30000. La dimension des cristaux est de 20x2 micromètres (x10⁻⁶ m).

### EXEMPLE 3.

Préparation d'une zéolithe TON selon l'invention à partir d'un agent structurant autre que celui utilisé dans les exemples 1 et 2.

Cet exemple illustre la possibilité d'utiliser comme agent structurant la n-butylamine.

Les sources de silice et de fluorure sont les mêmes que celles des exemples précédents.

La composition molaire du mélange est alors la suivante:
0,04 SiO₂ (aerosil), C₄H₉NH₂, 0,04 HF, 0,96 H₂O
pH initial = 8 ; ensemencement avec 0,048 g de zéolithe TON de l'exemple 1.

Les conditions de chauffage en autoclave sont respectivement : température : 170°C ; durée : 3 jours ; vitesse d'agitation : 10 t.min⁻¹.

Après synthèse, le pH du milieu réactionnel est de 9 et le produit (2,31 g) ne présente aucune trace de composé amorphe.

Les cristaux obtenus sont en fait des aiguilles dont la longueur moyenne est de l'ordre de la centaine de micromètres.

Le diagramme de diffraction des rayons X est analogue à celui du tableau 1 de la description. Le rapport SiO₂/Al₂O₃ du solide est supérieur à 30000.

La zéolithe calcinée à 800°C perd 3,1 % en poids, sa teneur en fluor est de 0,08 % et le diagramme de diffraction des rayons X du solide ne présente aucun changement par rapport à celui du produit brut de synthèse.

Cette zéolithe placée à l'humidificateur, sous une pression relative de vapeur d'eau P/Po=0,8 reste hydrophobe.

### EXEMPLE 4.

Préparation d'une zéolithe TON selon l'invention à partir d'une source de silice différente de celle des exemples précédents.

On prépare dans ce cas un gel silicaté par hydrolyse de l'ester tétraéthylique de l'acide orthosilicique Si(OC₂H₅)₄.

25 cm³ de Si(OC₂H₅)₄ et 50 cm³ d'eau sont portés à reflux pendant 3 heures.

Après précipitation du gel silicaté, l'éthanol formé au cours de l'hydrolyse est éliminé par distillation. Le gel est ensuite séché à 80°C pendant 2 jours, puis finement broyé.

Le pourcentage pondéral en silicium est de 39 %.

On réalise ensuite un mélange de composition molaire suivante :
1SiO₂, 1 C₄H₉NH₂, 1 HF, 24H₂O
fraction molaire = 0,04.

La n-butylamine est au préalable salifiée par l'acide fluorhydrique. L'ensemble est placé dans le même type d'autoclave que pour les exemples précédents. Les conditions opératoires sont les suivantes :
pH initial : 7-8
Température de réaction : 170°C
vitesse d'agitation : 10 t.min⁻¹.

Après 2 jours de synthèse (pH final = 7-8), nous obtenons 2,1 g d'un solide présentant de nombreux amas. L'observation de ces derniers en microscopie optique montre qu'ils sont constitués d'un enchevêtrement de fibrilles dont la dimension moyenne est de l'ordre de 40 micromètres.

Le diagramme de diffraction X du produit brut de synthèse est conforme à celui du tableau 1.

Après élimination du structurant organique par calcination à 800°C, la zéolithe TON placée à l'humidificateur, sous une pression relative de vapeur d'eau P/Po reste hydrophobe.

Le rapport molaire Si/Al est alors supérieur à 18000 et la teneur en élément fluor de l'ordre de 0,08 %. La dimension des cristaux est de l'ordre de 30x3 micromètres (x10⁻⁶ m).

### EXEMPLE 5.

Préparation d'une zéolithe TON de rapport SiO₂/Al₂O₃ = 200.

On prépare le sel fluoré de la n-butylamine par salification de l'amine (8,776 g) avec de l'acide fluorhydrique à 50°C (4,8 g).

On ajoute ensuite à l'ensemble respectivement 9,12 cm³ d'eau, 0,110 g de fluorure d'aluminium trihydraté (AlF₃, 3H₂O), 2,40 g de silice aerosil et 0,048 g de germes d'une zéolithe TON silicique préparé selon un processus analogue à celui de l'exemple 3.

La composition molaire du mélange réactionnel est donnée ci-dessous :
1SiO₂, 0,02AlF₃, 3H₂O, 3 C₄H₁₁N, 3 HF, 16 H₂O
fraction molaire engagée : 0,04

Le milieu réactionnel (pH initial = 9) est placé dans les autoclaves de 120 cm³, puis il est porté à 170°C pendant 5 jours dans une étuve équipée d'un système d'agitation (vitesse de rotation 10 t.min⁻¹).

Après réaction (pH final = 8-9), on recupère 2,08 g de solide. Celui-ci est lavé, filtré, puis séché à l'étuve à 90°C. Les cristaux sont aciculaires et leur dimension moyenne est de l'ordre de (30 x 3) m.

Le diagramme de diffraction des rayons X du produit brut de synthèse est tout à fait analogue à celui de la description (tableau 1).

Après élimination du structurant organique par calcination à l'air à 650°C le rapport molaire SiO₂/Al₂O₃ de la zéolithe TON est voisin de 200, et sa teneur en fluor de l'ordre de 0.3 % en poids.

### EXEMPLE 6.

Cet exemple illustre la possibilité de préparer la zéolithe TON avec un rapport molaire SiO₂/Al₂O₃ = 200 en grande quantité.

Le mode opératoire utilisé est tout à fait analogue à celui de l'exemple 5.

On prépare un mélange ayant la composition molaire suivante :
1SiO₂ (aerosil), 0,02AlF₃, 3 H₂O, 3C₄H₁₁N, 3 HF, 16 H₂O
en utilisant 50 % des quantités molaires indiquées. La réaction est ensemencée avec 0,6 g d'une zéolithe TON préparée selon l'exemple 5.

Le mélange (pH = 8) est réparti dans trois autoclaves de 120 cm³ puis chauffé pendant 5 jours à 170°C. Le pH final est 9.

On recueille 26,5 g de zéolithe TON, dont les cristaux aciculaires ont une dimension moyenne de 50 micromètres.

L'analyse chimique du composé conduit à un rapport SiO₂/Al₂O₃ = 200 et à teneur en fluor de 0.6 % en poids.

Après calcination sous air à 700°C, le produit placé à l'humidificateur P/Po = 0,8 adsorbe 1,8 % en poids d'eau.

Le diagramme de diffraction des rayons X est tout à fait analogue à celui du tableau 1.

### EXEMPLE 7.

Préparation d'une zéolithe TON de rapport SiO₂/Al₂O₃ = 240 avec une autre source d'un fluorure que celle utilisée dans les exemples précédents.

Dans cette préparation, on utilise comme source d'agent fluorure le dihydrogénofluorure d'ammonium NH₄HF₂ à la place de l'acide fluorhydrique.

Les sources de silice et d'amine sont par ailleurs les mêmes que celles de l'exemple 6.

La composition molaire du mélange ainsi employé est de :
1SiO₂ (aerosil), 0,02AlF₃, 3H₂O, 3C₄H₁₁N, 1,5 NH₄HF₂, 18H₂O, pH initial : 7-8. de zéolithe TON aluminosilicique sont ajoutés à la préparation.

Le mélange réactionnel placé dans les autoclaves en acier inox de 120 cm³ est porté à une température de 170°C pendant une durée de 3 jours, dans une étuve équipée d'un système d'agitation (v = 10 t.min⁻¹).

Après réaction, le pH final est de (7-8). Le solide obtenu est lavé, filtré puis séché à l'étuve à 90°C.

Les fibres obtenues ont des dimensions variables comprises entre 30 et 60 micromètres (30 x 10⁻⁶ m et 60 x 10⁻⁶ m). Le diagramme de diffraction des rayons X du solide est tout à fait conforme à celui du tableau 1 de la description.

Après calcination à l'air à 650°C pendant 5 heures, aucun changement structural significatif n'est observé et l'analyse chimique de la zéolithe conduit à un rapport Si/Al = 120.

La teneur prépondérale en élément fluor est alors de 0,07 % en poids.

### EXEMPLE 8.

Préparation d'une zéolithe TON de rapport SiO₂/Al₂O₃ = 100 selon l'invention à partir d'un agent structurant et d'une source d'aluminium différente de celle des exemples 5, 6 et 7.

Cet exemple illustre la possibilité d'utiliser la n-pentylamine comme structurant organique et le chlorure d'aluminium hexahydraté comme source d'aluminium.

Pour cet exemple, le n-pentylamine est également salifiée par l'acide fluorhydrique au préalable.

On réalise le mélange réactionnel suivant :
1SiO₂ (aerosil), 0,01 AlCl₃, 6H₂O, 3 C₅H₁₃N, 3 HF, 16 H₂O
pH initial = 8 ; fraction molaire engagée 0,011 ; ensemencement avec 0,013 g d'une zéolithe TON préparée selon l'exemple 5.

Le milieu de synthèse est alors placé dans un autoclave de 20 cm³ en acier inoxydable, revêtu d'une chemise en polytétrafluoroéthylène. Celui-ci est alors porté à une température de 170°C pendant 5 jours dans une étuve équipée d'un système d'agitation (vitesse de rotation = 20 t.min.⁻¹).

Après réaction (pH = 9), le solide obtenu est lavé, séparé du gel encore présent par sonication. On récupère ainsi 0,49 g d'un solide fibreux dont les cristallites ont pour dimension moyenne (40 x 2) micromètres (x10⁻⁶ m).

Le diagramme de diffraction X du produit est tout à fait analogue à celui de la description (tableau 1), et après calcination à l'air à 800°C pendant 5 heures, aucun changement structural significatif n'est observé.

La composition chimique de la zéolithe est alors :
SiO₂ 96,7 %, Al₂O₃ 0,84 %, F⁻ 0,09 %, H₂O 2,1 %
ce qui correspond à un rapport SiO₂/Al₂O₃ égal à environ 200.

## Revendications

1. Zéolithe cristalline synthétique du type TON caractérisée par :
a) Un rapport SiO₂/Al₂O₃ molaire compris entre 50 et 40.000,
b) Un diagramme de diffraction des rayons X représenté dans le tableau ci-dessous, et
| dhkl | I/Io | dhkl | I/Io |
|---|---|---|---|
| 10,84 - 10,91 | FF | 3,285 - 3,290 | f |
| 8,59 - 8,66 | mF | 3,220 - 3,225 | ff |
| 6,91 - 6,94 | mF | 2,972 - 2,980 | f |
| 5,39 - 5,42 | m | 2,938 - 2,940 | ff |
| 5,30 - 5,34 | m | 2,889 - 2,893 | ff |
| 4,55 - 4,58 | mf | 2,754 - 2,760 | ff |
| 4,31 - 4,36 | F | 2,738 - 2,740 | ff |
| 3,67 - 3,69 | FF | 2,714 - 2,720 | ff |
| 3,60 - 3,61 | FF | 2,520 - 2,526 | m |
| 3,46 - 3,48 | F | 2,429 - 2,431 | m |
| 3,36 - 3,37 | f | 2,359 - 2,362 | m |
| 3,345 - 3,355 | f | | |
c) Une teneur en fluor comprise entre environ 0,01 et 2 % en poids.

2. Zéolithe selon la revendication 1 caractérisée en ce qu'elle comporte des cristaux dont au moins une dimension est comprise entre 0,1 et 250 micromètres (1 et 250x10⁻⁶ m).

3. Zéolithe selon l'une quelconque des revendications 1 et 2 caractérisée en ce que le rapport molaire SiO₂/Al₂O₃ est compris entre environ 100 et 40.000.

4. Procédé de préparation d'une zéolithe synthétique cristalline selon l'une des revendications 1 à 3 caractérisé en ce que :
a) on forme un mélange réactionnel ayant un pH inférieur à 9 comprenant de l'eau, au moins une source de silice, au moins une source d'un sel d'aluminium, au moins une source d'agent mobilisateur contenant des ions fluorure, au moins une source d'agent structurant pouvant fournir des cations organiques choisis parmi les cations monoalkylammonium, dialkylammonium et monoalkyldiammonium,, ledit mélange ayant une composition en termes de rapports molaires. comprise dans les intervalles de valeurs suivants :
| | |
|---|---|
| SiO₂/Al₂O₃ | ≧ 20 |
| F⁻/SiO₂ | 0.1 à 6 |
| cations organiques/SiO₂ | 0.1 à 6 |
| H₂O/SiO₂ | 6 à 200 |
b) on maintient ledit mélange à une température de chauffage au plus égale à environ 250° C jusqu'à ce qu'on obtienne un composé cristallin et
c) on calcine ledit composé à une température supérieure à 350° C.

5. Procédé selon la revendication 4 dans lequel la source d'agent structurant est une source pouvant fournir des cations organiques choisis parmi les cations n-butylammonium, n-pentylammonium, dipentylammonium et diammonium-1, 4 pentane.

6. Procédé selon l'une des revendications 4 à 5 dans lequel on prépare ledit mélange à un pH et avec une composition en termes de rapports molaires compris dans les intervalles de valeurs suivants :
| | |
|---|---|
| pH : 4 à 10, de préférence | ≧ 100 |
| F⁻/SiO₂ | 1-3 |
| structurant organique/SiO2 | 1-3 |
| H₂O/SiO₂ | 15-80 |

7. Procédé selon l'une des revendications 4 à 6 dans lequel on ajoute au moins un sel complémentaire audit mélange à une concentration définie dans le rapport molaire, sel complémentaire par rapport à la silice compris entre 0,1 et 4 et/ou au moins un germe de cristal de la zéolithe préparée selon l'une des revendications 4 et 5 dans le rapport pondéral cristal/silice compris entre environ 0,01 et 0,1.

8. Procédé selon l'une quelconque des revendications 4 à 7 dans lequel on maintient la température de chauffage du mélange réactionnel entre 60 et 210° C pendant une durée de 24 à 1300 heures.

9. Procédé selon l'une quelconque des revendications 4 à 8 dans lequel le milieu réactionnel peut être chauffé dans une étuve équipée d'un système d'agitation, de façon à diminuer les durées de réaction.

## Claims

1. A synthetic crystalline zeolite of the TON type characterized by :
a) a SiO₂/Al₂O₃ molar ratio ranging from 50 to 40,000
b) an X-ray diffraction diagram shown in the table hereunder, and
| dhkl | I/Io | dhkl | I/Io |
|---|---|---|---|
| 10.84 - 10.91 | FF | 3.285 - 3.290 | f |
| 8.59 - 8.66 | mF | 3.220 - 3.225 | ff |
| 6.91 - 6.94 | mF | 2.972 - 2.980 | f |
| 5.39 - 5.42 | m | 2.938 - 2.940 | ff |
| 5.30 - 5.34 | m | 2.889 - 2.893 | ff |
| 4.55 - 4.58 | mf | 2.754 - 2.760 | ff |
| 4.31 - 4.36 | F | 2.738 - 2.740 | ff |
| 3.67 - 3.69 | FF | 2.714 - 2.720 | ff |
| 3.60 - 3.61 | FF | 2.520 - 2.526 | m |
| 3.46 - 3.48 | F | 2.429 - 2.431 | m |
| 3.36 - 3.37 | f | 2.359 - 2.362 | m |
| 3.345 - 3.355 | f | | |
c) a fluorine content ranging from about 0.01 to 2 % by weight.

2. A zeolite as claimed in claim 1, comprising crystals having at least one dimension ranging from 0.1 to 250 micrometers (1 to 250 x 10⁻⁶ m).

3. A zeolite as claimed in any one of claims 1 and 2, wherein the SiO₂/Al₂O₃ molar ratio ranges from about 100 to 40,000.

4. A process for preparing a synthetic crystalline zeolite as claimed in any one of claims 1 to 3, comprising:
a) preparing a reaction mixture with a pH value lower than 9, containing water, at least one source of silica, at least one source of an aluminum salt, at least one source of a mobilizing agent containing fluoride ions, at least one source of a structuring agent which can supply organic cations selected among monoalkylammonium, dialkylammonium and monoalkyldiammonium cations, said mixture having a composition, in terms of molar ratios, included within the following value ranges :
| | |
|---|---|
| SiO₂/Al₂O₃ | ≧ 20 |
| F⁻/SiO₂ | 0.1 to 6 |
| organic cations/SiO₂ | 0.1 to 6 |
| H₂O/SiO₂ | 6 to 200 |
b) maintaining said mixture at a heating temperature of about 250°C at most, until a crystalline compound is obtained, and
c) calcining said compound at a temperature higher than 350°C.

5. A process as claimed in claim 4, wherein the source of structuring agent is a source which may supply organic cations selected among the n-butylammonium, n-pentylammonium, dipentylammonium and 1-diammonium, 4 pentane cations.

6. A process as claimed in any one of claims 4 and 5, wherein said mixture is prepared with a pH value and a composition, in terms of molar ratios, included in the following value ranges :
| | |
|---|---|
| pH value : 4 to 10, preferably | ≧ 100 |
| F⁻/SiO₂ | 1-3 |
| organic structuring agent/SiO₂ | 1-3 |
| H₂O/SiO₂ | 15-80. |

7. A process as claimed in any one of claims 4 to 6, wherein at least one complementary salt is added to said mixture at a concentration defined in the molar ratio, a salt which is complementary in relation to the silica ranging from 0.1 to 4 and/or at least one crystal nucleus of the zeolite prepared according to one of claims 4 and 5, with a crystal/silica ratio by weight ranging from about 0.01 to 0.1.

8. A process as claimed in any one of claims 4 to 7, wherein the heating temperature of the reaction mixture is maintained at a value ranging from 60 to 210°C for a duration ranging from 24 to 1,300 hours.

9. A process as claimed in any one of claims 4 to 8, wherein the reaction medium may be heated in a drying oven fitted with a stirring system in order to reduce the reaction durations.

## Patentansprüche

1. Kristalliner synthetischer Zeolith vom TON-Typ, gekennzeichnet durch
a) ein SiO₂/Al₂O₃-Molverhältnis zwischen 50 und 40 000,
b) ein Röntgenbeugungsdiagramm, wie in der nachstehenden Tabelle dargestellt,
| dhkl | I/Io | dhkl | I/Io |
|---|---|---|---|
| 10,84 - 10,91 | FF | 3,285 - 3,290 | f |
| 8,59 - 8,66 | mF | 3,220 - 3,225 | ff |
| 6,91 - 6,94 | mF | 2,972 - 2,980 | f |
| 5,39 - 5,42 | m | 2,938 - 2,940 | ff |
| 5,30 - 5,34 | m | 2,889 - 2,893 | ff |
| 4,55 - 4,58 | mf | 2,754 - 2,760 | ff |
| 4,31 - 4,36 | F | 2,738 - 2,740 | ff |
| 3,67 - 3,69 | FF | 2,714 - 2,720 | ff |
| 3,60 - 3,61 | FF | 2,520 - 2,526 | m |
| 3,46 - 3,48 | F | 2,429 - 2,431 | m |
| 3,36 - 3,37 | f | 2,359 - 2,362 | m |
| 3,345 - 3,355 | f | | |
und
c) einen Fluorgehalt zwischen etwa 0,01 und etwa 2 Gew.-%.

2. Zeolith nach Anspruch 1, dadurch gekennzeichnet, daß er Kristalle umfaßt, die in mindestens einer Dimension eine Größe zwischen 0,1 und 250 µm (1 bis 250 x 10⁻⁶ m) haben.

3. Zeolith nach einem der Ansprüche 1 und 2, dadurch gekennzeichnet, daß das SiO₂/Al₂O₃-Molverhältnis zwischen etwa 100 und etwa 40 000 liegt.

4. Verfahren zur Herstellung eines kristallinen synthetischen Zeoliths nach einem der Ansprüche 1 bis 3, dadurch gekennzeichnet, daß man
a) ein Reaktionsgemisch mit einem pH-Wert unterhalb 9 herstellt, das enthält Wasser, mindestens eine Siliciumdioxid-Quelle, mindestens eine Aluminiumsalz-Quelle, mindestens eine Quelle für ein Fluoridionen enthaltendes Mobilisierungsmittel, mindestens eine Quelle für einen Strukturbildner, der organische Kationen, ausgewählt aus den Monoalkylammonium-, Dialkylammonium- und Monoalkyldiammonium-Kationen, liefern kann, wobei dieses Gemisch eine Zusammensetzung mit Molverhältnissen mit Werten innerhalb der nachstehend angegebenen Bereiche hat:
| | |
|---|---|
| SiO₂/Al₂O₃ | ≧ 20 |
| F⁻/SiO₂ | 0,1 bis 6 |
| organische Kationen/SiO₂ | 0,1 bis 6 |
| H₂O/SiO₂ | 6 bis 200 |
b) dieses Gemisch bei einer Erwärmungstemperatur von höchstens etwa 250°C hält, bis man eine kristalline Verbindung erhält, und
c) diese Verbindung bei einer Temperatur über 350°C calciniert.

5. Verfahren nach Anspruch 4, bei dem es sich bei der Quelle für den Strukturbildner um eine Quelle handelt, die organische Kationen, ausgewählt aus n-Butylammonium-, n-Pentylammonium-, Dipentylammonium- und 1,4-Diammonium-pentan-Kationen, liefern kann.

6. Verfahren nach einem der Ansprüche 4 bis 5, bei dem man ein Gemisch mit einem pH-Wert und mit einer Zusammensetzung mit Molverhältnissen mit Werten innerhalb der nachstehend angegebenen Bereiche herstellt:
| | |
|---|---|
| pH-Wert 4 bis 10, vorzugsweise 6 bis 9 SiO₂/Al₂O₃ | ≧ 100 |
| F⁻/SiO₂ | 1 bis 3 |
| organischer Strukturbildner/SiO₂ | 1 bis 3 |
| H₂O/SiO₂ | 15 bis 80 |

7. Verfahren nach einem der Ansprüche 4 bis 6, bei dem man dem Gemisch zusetzt mindestens ein komplementäres Salz in einer solchen Konzentration, daß das Molverhältnis zwischen dem komplementären Salz und dem Siliciumdioxid zwischen 0,1 und 4 liegt, und/oder mindestens einen Zeolith-Impfkristall, hergestellt nach einem der Ansprüche 4 und 5, in einer solchen Konzentration, daß das Gewichtsverhältnis Impfkristall/Siliciumdioxid zwischen etwa 0,01 und etwa 0,1 liegt.

8. Verfahren nach einem der Ansprüche 4 bis 7, bei dem man die Erwärmungstemperatur des Reaktionsgemisches während einer Dauer von 24 bis 1300 Stunden zwischen 60 und 210°C hält.

9. Verfahren nach einem der Ansprüche 4 bis 8, bei dem das Reaktionsgemisch in einem mit einem Rührsystem ausgestatteten Trocknungsofen (Trockenschrank) erhitzt werden kann, um die Reaktionsdauer zu vermindern.
